# EUROPEAN PATENT APPLICATION

(11) **EP 4 795 933 A1**
(43) Date of publication of application: **26.08.2026**
(21) Application number: 25159082.4
(22) Date of filing: 20.02.2025
(51) Int. Cl.: A01M 7/00

(54) **AGRICULTURAL FIELD SPRAYER WITH A CAMERA FOR DETECTING FOAMING OF A SPRAYING LIQUID**

(71) Applicant: Deere & Company, Moline, IL 61265 (US)
(72) Inventor: LOKARE, PRADEEP PRAKA, 68163 Mannheim (DE); SHINDE, NATHMADHAV, 68163 Mannheim (DE); PEETERS, WILLY, 68163 Mannheim (DE)
(74) Representative: Holst, Sönke

(57) **Abstract**

An agricultural field sprayer (10) has a tank (20) for receiving a liquid (28) containing active ingredient dissolved in water that may be object to foaming. The tank (20) comprises an electronic camera (56) with a field of view directed towards the surface of the liquid (28) in the tank (20).

## Description

The present invention relates to an agricultural field sprayer with a tank for receiving a liquid containing active ingredient dissolved in water that may be object to foaming.

### State of the art

Agricultural distribution vehicles with a tank for a liquid product to be applied to an agricultural field, commonly referred to as field sprayers, are used to spread liquid products on a field. The distribution vehicles can be designed as self-propelled or towed vehicles or can be mounted detachably on a carrier vehicle (agricultural tractor). They comprise a relatively wide distributor linkage that folds in for transport and on which nozzles are distributed across the width of the distributor linkage to deliver the product. The products are usually liquids used to fertilize crops grown in the field or to control diseases or pests or weeds.

A possible problem with such field sprayers is foaming of the liquid product. Such foaming can occur during filling of the tank with the product or when the product is agitated (by pumping the product through nozzles into the tank or stirring the liquid within the tank to keep the concentration of active substances within the product homogenous) or when the tank is emptied. Foaming is in particular a problem when the tank is filled up to the top with a foam-problematic product and the latter runs out of the tank, since then the entire sprayer needs to be cleaned from the outside. Once foaming occurs, certain chemicals (foam stopper) can be applied to the tank to stop foaming.

Some details of field sprayers were described to avoid foaming of the product during filling of the tank (EP 0 405 244 A1, EP 0 472 860 A1), and reduction of agitation with decreasing tank fill state (DE 38 24 744 A1) to reduce or avoid foaming.

### Task

As described, foaming can be problematic in field sprayers, but no method of detection of foaming is known in the art, except that an operator sees when product runs out of the tank, but then the damage has already occurred. Foaming can also negatively influence the accuracy of sensing of a tank fill state sensor. Some prior art foam detection by means of cameras was described in the context of bioreactors in which cells or microorganisms produce an antibody, a vaccine antigen or other type of biopharmaceutical (US 2021/0123101 A1) or containers in which fermentation processes for brewing take place (EP 1 243 644 A1), however not in the context of tanks of field sprayers.

The present invention has set itself the object to provide a field sprayer in which at least one of the mentioned problems are avoided or reduced.

### Solution

This object is achieved according to the invention by the teaching of patent claims 1 and 10, wherein features are listed in the further claims which further develop the solution in an advantageous manner.

An agricultural field sprayer with a tank for receiving a liquid containing active ingredient dissolved in water that may be object to foaming is characterized in that the tank comprises an electronic camera with a field of view directed towards the surface of the liquid in the tank. The camera thus observes the surface of the liquid in the tank and an operator can view the image of the camera on a display and recognize foaming and in this case apply appropriate measures, and/or the foaming is detected automatically by an image processing system which alerts the operator or performs the measures automatically. This significantly reduces the risk that foaming has problematic consequences.

### Embodiment

In the drawings, embodiments described in more detail are shown below. It shows:
- Fig. 1: a schematical side view of a field sprayer, and
- Fig. 2: a schematic section through the tank of the sprayer of fig. 1 along lines 2-2.

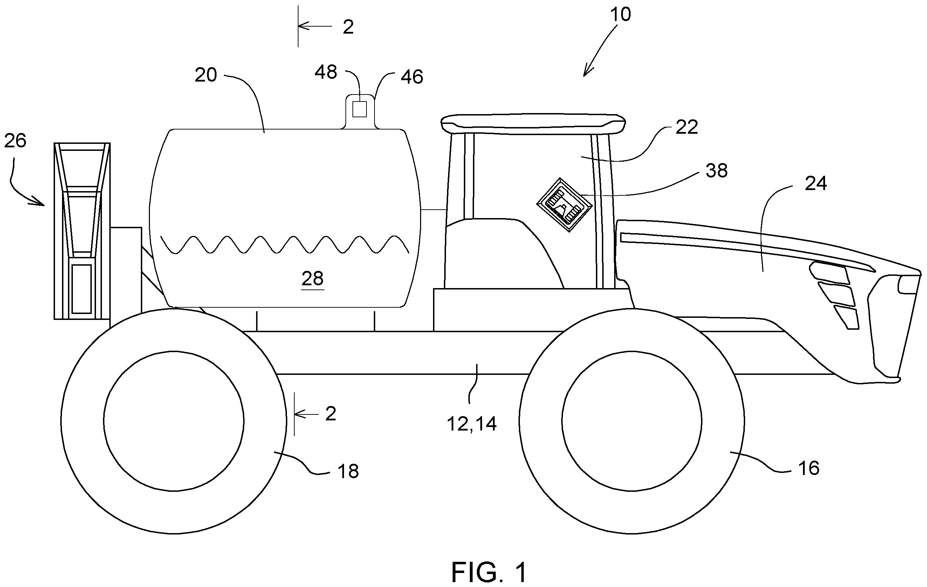

Figure 1 shows a field sprayer 10 for the application of a liquid with active ingredients in the form of a self-propelled vehicle, which could be designed in another embodiment as a device attachable to a farm tractor or towed by it. The field sprayer 10 comprises a chassis 12 with a frame 14 resting on the ground on front wheels 16 and rear wheels 18. The wheels 16, 18 may be steerable and/or driven. On the frame 14, a tank 20 for receiving a liquid 28 to be applied (active ingredient dissolved in water) and a cabin 22 behind an engine compartment 24 are supported. The usual direction of travel V in operation is directed to the right in Figure 1. At the rear, an inclination and height-adjustable distribution linkage 26 is attached to the frame 14 of the distribution vehicle 10.

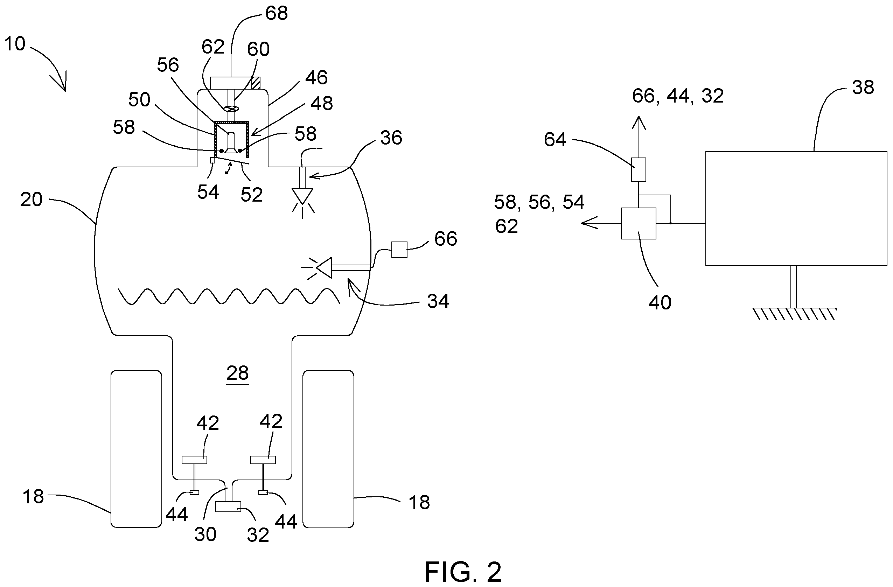

As shown in fig. 2, the tank 20 comprises at its bottom an opening 30 connected to a valve assembly 32. The valve assembly 32 is adapted to fill the tank 20 with the liquid 28 and to receive the liquid 28 from the tank 20 for supplying it to nozzles on the distribution linkage 26, although filling of tank 20 can be performed though other openings, for example at the top of tank 20. The tank 20 also comprises a number of agitation nozzles 34, though which liquid 28 removed from tank 20 through bottom opening 30 can be re-introduced into tank 20 to keep the concentration of the active ingredient in tank 20 constant. The rate of liquid flowing through the agitation nozzles 36 is controlled by a valve 66. Agitation of liquid 28 is also possible by propellers 42 driven by motors 44. The tank 20 also has rinsing nozzles 36 with which the interior of tank 20 can be cleaned after spraying.

At the cabin 22, a user interface 38 with a display and input means is provided, preferably in the form of a virtual terminal for a bus system according to ISO 11723, allowing to control functions of the sprayer 10. A control unit 40 connects the user interface 38 to a camera system 48 located at the top of tank 20. In the embodiment shown, the camera system 48 is inside a dome 46 at the upper side of the tank 20, supported on the underside of a removable lid 68 at the top of dome 46.

The camera system 48 comprises a housing 50 with a lower opening that can be closed with a shutter 52. The shutter 52 is operated by an actuator 54 adapted to move the shutter 52 between a closed position, in which the housing 50 is entirely sealed with respect to the tank 20 and an open position in which a camera 56 mounted inside housing 50 can view into the tank 20 and has a field of view directed towards the upper surface of the liquid 28. The housing 50 also contains illumination means (for example LEDs) 58 that illuminate the liquid 28. The housing 50 is connected to a holder 60 mounted at the top of dome 46 by an actuator 62 that can pivot housing 50 in the forward direction and/or the lateral direction to scan the surface of the liquid 28. In case that a super wide angle or fisheye lens is used, actuator 62 can be omitted. Also, actuator 62 could be within housing 50 instead of outside thereof.

The operator in cabin 22 can thus provide input into user interface 38 to start operation of the camera system 48. The operator will start camera operation in particular in situations when foaming of liquid can be expected or suspected. Such situations can be during filling of tank 20 or during a spraying operation or when the sprayer 10 drives over uneven terrain. These situations can also be detected automatically by a controller 64 that controls operation of the sprayer 10, for example at least one of automatic filling, spraying, agitation and rinsing, be it completely automatic or at least in part under operator control with the user interface 38 giving instructions to the operator and receiving confirmation that the instructions have been fulfilled.

Once operation of the camera system 48 starts, control unit 40 instructs actuator 54 to open shutter 52, to switch the illumination means 58 on and to start receiving image signals from an image sensor of camera 56. Control unit 40 or operator (via user interface 38) can also instruct actuator 62 to scan the surface of the liquid 28 in one or two dimensions and/or control a lens of camera 56 with variable focal length (zoom lens) to show interesting parts with an increased magnification ratio.

In a first embodiment, the image signals provided by camera 56 are displayed in an image on the display of the user interface 38, be it unprocessed or processed for better perceptibility using image processing software of control unit 40, while the image can be shown on the entire display or a part thereof. This enables the operator to see if problems in tank 20 are arising and to take necessary measures, for example reducing the flow rate of liquid 28 into the tank 20 during filling or to introduce anti-foaming chemicals into the tank 20 or to decrease agitation by propellers 42 and/or agitation nozzles 36.

In a second embodiment, the image processing software running on control unit 40 is configured to detect foaming in tank 20 automatically by image processing, for example detecting bubbles in the image. For this purpose, artificial intelligence can be used (neural network, deep learning etc.), or algorithms as described in US 2021/0123101 A1 or EP 1 243 644 A1. Once foaming is detected, a warning signal is given to operator via the user interface 38, be it optical or acoustic. The detected foam size and density can also be displayed to the operator.

In a third embodiment, once foaming has been detected by the image processing software in control unit 40, a corresponding signal is sent to controller 64, which then takes measures against the foaming, for example by controlling valve assembly 32, motors 44 and/or valve 66 (and/or a pump, not shown, providing the agitation liquid to nozzles 34) to reduce or stop foaming. Alternatively, or additionally, the warning message can be given to operator via the user interface 38 (such that the operator can provide appropriate control input to the sprayer 10 via the user interface 38, as described in the previous sentence) and/or instructions, for example to introduce anti-foaming agent into tank 20, or the operator can input information to the user interface 38 that he sees foaming in the tank 20 and then the controller 64 performs said measures automatically and/or with operator support by displaying appropriate actions to be taken on the display of user interface 38.

After all, it is apparent that the camera system 48 allows an operator or a control unit 40 to view inside the tank 20 and to see occurring foaming on a display or to detect foaming automatically. Thus, appropriate countermeasures can be applied instantaneously and larger problems, for example with liquid 28 pouring out of tank 20 and contaminating the sprayer 10 and the environment, can be avoided.

In the described embodiment, the user interface 38 is shown an integral part of the sprayer 10. In another embodiment, the user interface 38 can be a mobile, preferably hand-held equipment like a laptop or tablet computer or a smartphone receiving signals from camera 56 preferably in a wireless manner using a suitable protocol. The control unit 40 would then be integrated into the user interface 38. The operator would in this case need to initiate the counter-measures on his end.

## Claims

1. An agricultural field sprayer (10) with a tank (20) for receiving a liquid (28) containing active ingredient dissolved in water that may be object to foaming, **characterized in that** the tank (20) comprises an electronic camera (56) with a field of view directed towards the surface of the liquid (28) in the tank (20).

2. The sprayer (10) of claim 1, wherein the camera (56) is connected to a control unit (40) configured to send the image signal of the camera (56) to a display of a user interface (38) and/or to process the image signal to detect possible foaming of the liquid (28) in the tank (20).

3. The sprayer (10) of claim 2, wherein the camera (56) is contained in a housing (50) mounted within the tank (20), the housing (50) comprising a shutter (52) operable by an actuator (54) and movable between an open position in which the camera (56) looks into the tank (20) and a closed position in which the housing (50) is sealed with respect to the tank (20).

4. The sprayer (10) of claim 3, wherein the housing (50) further contains illumination means (58) adapted to illuminate the interior of the tank (20).

5. The sprayer (10) of claim 3 or 4, comprising an actuator (62) for pivoting the field of view of the camera (58) at least in one direction.

6. The sprayer (10) of one of claims 3 to 5, wherein the camera (58) has a variable focal length.

7. The sprayer (10) of one of claims 3 to 5, wherein the control unit (40) is configured to activate the actuator (62) of the shutter (52) and/or the actuator (62) for pivoting the field of view of the camera (58) and/or the illumination means (58) and/or adjustment of the focal length of the camera (56) and/or to switch on the camera (56) based on operator input via the user interface (38) and/or based on automatic detection of a foaming-susceptible situation by a controller (64) of the sprayer (10).

8. The sprayer (10) of one of claims 2 to 7, wherein a controller (64) of the sprayer (10) is configured to receive a signal from the control unit (40) and/or from the user interface (38) indicating foaming and to automatically activate measures against the foaming.

9. The sprayer (10) of claim 8, wherein the measures against the foaming comprise at least one of controlling valve assembly (32) for filling the liquid (28) into the tank, a motor (44) of agitation propeller (42), a valve (66) or a pump connected to agitation nozzle (34) and/or giving instructions to an operator via a user interface (38) to introduce anti-foaming agent into tank (20).

10. A method of detecting foaming in a tank (20) of an agricultural field sprayer (10) by means of a camera (56) viewing onto the surface of a liquid (28) in the tank (20).

## Amended claims

### Amended claims in accordance with Rule 137(2) EPC.

1. An agricultural field sprayer (10) with a tank (20) for receiving a liquid (28) containing active ingredient dissolved in water that may be object to foaming, **characterized in that** the tank (20) comprises an electronic camera (56) with a field of view directed towards the surface of the liquid (28) in the tank (20), wherein the camera (56) is connected to a control unit (40) configured to send the image signal of the camera (56) to a display of a user interface (38) and/or to process the image signal to detect possible foaming of the liquid (28) in the tank (20) and the camera (56) is contained in a housing (50) mounted within the tank (20), the housing (50) comprising a shutter (52) operable by an actuator (54) and movable between an open position in which the camera (56) looks into the tank (20) and a closed position in which the housing (50) is sealed with respect to the tank (20).

2. The sprayer (10) of claim 1, wherein the housing (50) further contains illumination means (58) adapted to illuminate the interior of the tank (20).

3. The sprayer (10) of claim 1 or 2, comprising an actuator (62) for pivoting the field of view of the camera (58) at least in one direction.

4. The sprayer (10) of one of claims 1 to 3, wherein the camera (58) has a variable focal length.

5. The sprayer (10) of one of claims 1 to 4, wherein the control unit (40) is configured to activate the actuator (62) of the shutter (52) and/or the actuator (62) for pivoting the field of view of the camera (58) and/or the illumination means (58) and/or adjustment of the focal length of the camera (56) and/or to switch on the camera (56) based on operator input via the user interface (38) and/or based on automatic detection of a foaming-susceptible situation by a controller (64) of the sprayer (10).

6. The sprayer (10) of one of claims 1 to 5, wherein a controller (64) of the sprayer (10) is configured to receive a signal from the control unit (40) and/or from the user interface (38) indicating foaming and to automatically activate measures against the foaming.

7. The sprayer (10) of claim 6, wherein the measures against the foaming comprise at least one of controlling valve assembly (32) for filling the liquid (28) into the tank, a motor (44) of agitation propeller (42), a valve (66) or a pump connected to agitation nozzle (34) and/or giving instructions to an operator via a user interface (38) to introduce anti-foaming agent into tank (20).
